# DEMANDE DE BREVET EUROPEEN

(11) **EP 1 498 650 A1**
(43) Date de publication de la demande: **19.01.2005**
(21) Numéro de dépôt: 04291662.7
(22) Date de dépôt: 01.07.2004
(51) Int. Cl.: F16L 3/01

(54) **Dispositif de guidage pour flexibles hydrauliques**

(30) Priorité: 15.07.2003 FR 0308590
(71) Demandeur: COMPAGNIE DU SOL, 92000 Nanterre (FR)
(72) Inventeur: Battefort, Thierry Compagnie du Sol, 92000 Nanterre (FR)
(74) Mandataire: Dronne, Guy

(57) **Abrégé**

Dispositif de guidage (40) pour flexibles hydrauliques (42) comprenant des pièces transversales (46) espacées périodiquement sur la largeur du dispositif de guidage, destinées à recevoir au moins des flexibles hydrauliques orientés perpendiculairement auxdites pièces transversales, caractérisé en ce qu'il comporte en outre au moins une portion de bande flexible (44) s'étendant selon la longueur des flexibles hydrauliques sur une face de laquelle sont fixées lesdites pièces transversales (46) et des moyens (48) de fixation desdits flexibles hydrauliques sur lesdites pièces transversales.

## Description

La présente invention concerne un dispositif de guidage pour flexibles hydrauliques utilisé, notamment, dans l'alimentation d'appareils hydrauliques de machines de forage.

Pour la réalisation de tranchées dans le sol en forme de parois, on connaît des outils de fraisage appelés le plus souvent fraises. Elles comportent un châssis suspendu à l'extrémité de moyens de levage, ce châssis étant muni à son extrémité inférieure de deux roues entraînées par des moteurs hydrauliques et munies de dents réparties sur deux tambours à axes horizontaux. Ces moteurs hydrauliques sont alimentés par un fluide hydraulique qui est acheminé depuis la surface par l'intermédiaire de tuyaux souples, appelés également flexibles hydrauliques. Pour alimenter les commandes hydrauliques, il est nécessaire d'acheminer, sur une longueur pouvant aller jusqu'à une centaine de mètres, un grand nombre de flexibles hydrauliques. Pour assurer à la fois le guidage de ces flexibles et l'enroulement sur le tambour situé à la surface, on utilise un dispositif de guidage des flexibles.

Un tel guide pour tuyaux souples est décrit dans le document EP 518 292. Le dispositif de guidage décrit dans ce brevet comporte des pièces transversales espacées longitudinalement sur toute la longueur du guide, servant à recevoir des tuyaux souples orientés perpendiculairement aux pièces transversales. Ces pièces transversales reposent à chacune de leurs extrémités sur une entretoise de maintien. Sur les bords du guide sont prévues des pièces d'extrémités ayant la même forme que les entretoises de maintien. La liaison des entretoises de maintien et des pièces d'extrémités est obtenue grâce à deux câbles de traction sur lesquels ces pièces sont enfilées. La liaison articulée est obtenue par le fait qu'il est prévu que les entretoises de maintien et les pièces d'extrémités comportent des formes profilées de guidage sur les deux faces opposées. Lors de l'enroulement sur le tambour, les entretoises de maintien se placent par couches directement les unes au-dessus des autres.

Ce type de guidage pour flexibles hydrauliques présente deux inconvénients majeurs. Tout d'abord, la réalisation des entretoises de maintien et des pièces de bords demande l'agencement précis de nombreuses pièces dont les faces doivent être correctement usinées pour créer la liaison articulée. La fabrication d'un tel dispositif est donc complexe et relativement coûteuse. Par ailleurs, lorsque le guide est enroulé sur le tambour, le diamètre de l'enroulement est très important à cause de la hauteur des entretoises de maintien qui sont empilées les unes sur les autres. Les pièces d'extrémités et les entretoises de maintien augmentent également la masse linéaire du dispositif de guidage si bien que la masse globale du dispositif ainsi que son encombrement, obligera à utiliser des tambours aux dimensions importantes.

En outre, les câbles de traction situés sur les deux côtés du dispositif de guidage servent uniquement à maintenir une tension constante dans le guide et ne servent pas à porter le châssis. En effet, celui-ci est suspendu par le biais du câble de traction 14.

La présente invention a pour but de proposer un dispositif de guidage pour tuyaux flexibles de fabrication simple, compacte et peu coûteuse, apte à surmonter les inconvénients mentionnés ci-dessus.

Le dispositif de guidage pour flexibles hydrauliques comprend des pièces transversales espacées périodiquement sur la largeur du dispositif de guidage, destinées à recevoir au moins deux flexibles hydrauliques orientés perpendiculairement auxdites pièces transversales, et il se caractérise en ce qu'il comporte en outre au moins une portion de bande flexible s'étendant selon la longueur des flexibles hydrauliques sur une face de laquelle sont fixées lesdites pièces transversales et des moyens de fixation desdits flexibles hydrauliques sur lesdites pièces transversales.

On comprend que le dispositif de guidage est d'une configuration telle qu'il n'est pas nécessaire de disposer ni de pièces d'extrémités, ni d'entretoises de maintien. Il y a donc moins de pièces à fabriquer et à assembler.

En outre, la combinaison de la bande flexible et des pièces transversales qui lui sont solidaires assure un moment d'inertie suffisant à l'ensemble autour de son axe longitudinal pour éviter ou limiter les risques de déformation en torsion du dispositif de guidage.

La portion de bande du dispositif de guidage peut être constituée par une bande unique qui s'étend d'une extrémité à l'autre du dispositif de guidage ou par une pluralité d'éléments de bandes raccordées mécaniquement entre elles par exemple par agrafage.

De préférence également, la bande flexible peut être réalisée en un matériau du type caoutchouc pourvu d'une armature interne pour assurer une résistance à la traction suffisante.

Selon un mode de réalisation, les pièces transversales peuvent faire partie intégrante de la bande flexible dans le cas où celle-ci est réalisée en un matériau du type caoutchouc. Dans un autre mode de réalisation, les pièces transversales peuvent être des pièces rapportées et fixées mécaniquement à espaces réguliers sur la bande flexible.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1 est une vue en perspective simplifiée d'un outillage pour la réalisation de parois moulées à grande profondeur ;
- la figure 2 est une vue en perspective d'une portion du dispositif de guidage munie de ses flexibles hydrauliques ;
- la figure 3 est une vue en coupe transversale d'un premier mode de réalisation des pièces transversales ;
- la figure 4 est une vue en coupe transversale d'un deuxième mode de réalisation des pièces transversales ; et
- la figure 5 est une vue en coupe transversale montrant un deuxième mode de fixation des flexibles hydrauliques sur les pièces transversales.

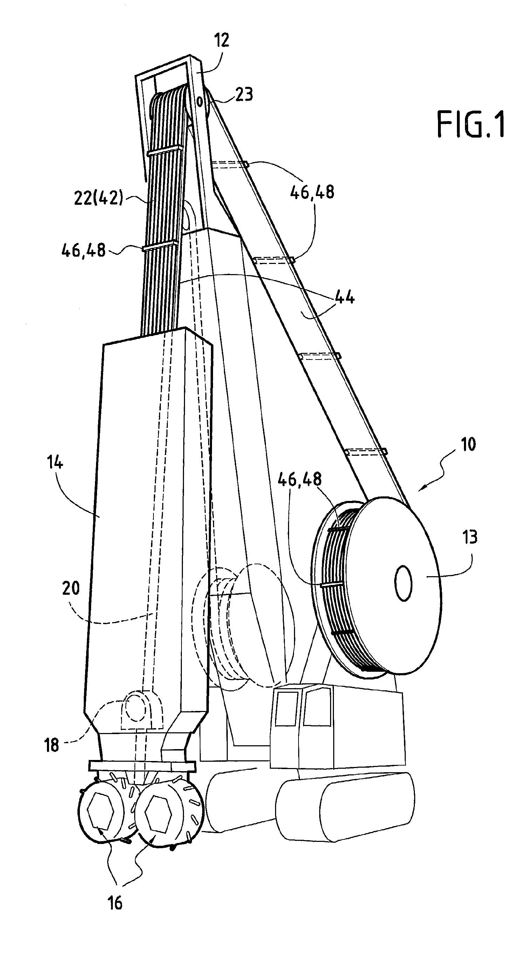

L'outillage pour la réalisation de parois moulées de grande profondeur représenté sur la figure 1 comprend un véhicule à chenilles 10 équipé d'une flèche 12 sur laquelle est suspendu un châssis de fraisage 14. Deux paires de roues de fraisage 16 d'axes horizontaux entraînées par des moteurs hydrauliques sont disposées à l'extrémité inférieure du châssis de fraisage 14. Ces roues de fraisage sont équipées de dents réparties en périphérie et destinées à creuser le sol.

Une pompe hydraulique 18 est également installée sur cette partie du châssis 14, au-dessus des roues de fraisage. Cette pompe permet d'aspirer les particules découpées par les fraises et de les évacuer vers la surface par l'intermédiaire du tuyau d'évacuation 20.

Le fonctionnement des différents organes hydrauliques (les moteurs, la pompe et éventuellement d'autres composants hydrauliques) nécessite une alimentation en fluide. Cette alimentation est réalisée par l'intermédiaire de flexibles hydrauliques 22 qui acheminent le fluide depuis la surface jusqu'aux différents appareils hydrauliques. Les flexibles 22 passent sur un rouleau 23 en tête de flèche. En pratique, ces flexibles hydrauliques 22 ont sensiblement la même forme géométrique et les mêmes dimensions, donc, en particulier, le même diamètre. Les flexibles sont enroulés, en amont, sur un tambour 13 fixé au véhicule 10.

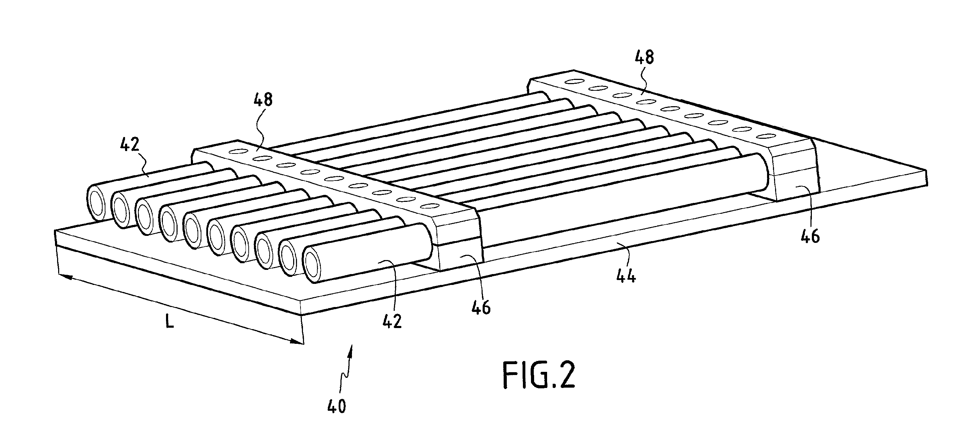

Sur la figure 2, on a représenté une portion du dispositif de guidage 40 équipée de flexibles hydrauliques 42. Le dispositif de guidage est essentiellement constitué par une bande flexible 44 sur laquelle sont fixées à intervalles réguliers des pièces transversales 46 de solidarisation et de maintien des flexibles hydrauliques 42. Chaque pièce transversale 46 est associée à des moyens de fixation 48 qui, en coopération avec les pièces transversales 46, permettent de solidariser les flexibles hydrauliques 42 dans leur portion où ils traversent les pièces transversales 46. Ces pièces transversales ont pour fonction de maintenir l'écartement entre les flexibles 42 et d'assurer une liaison mécanique entre les flexibles 42 et la bande 44.

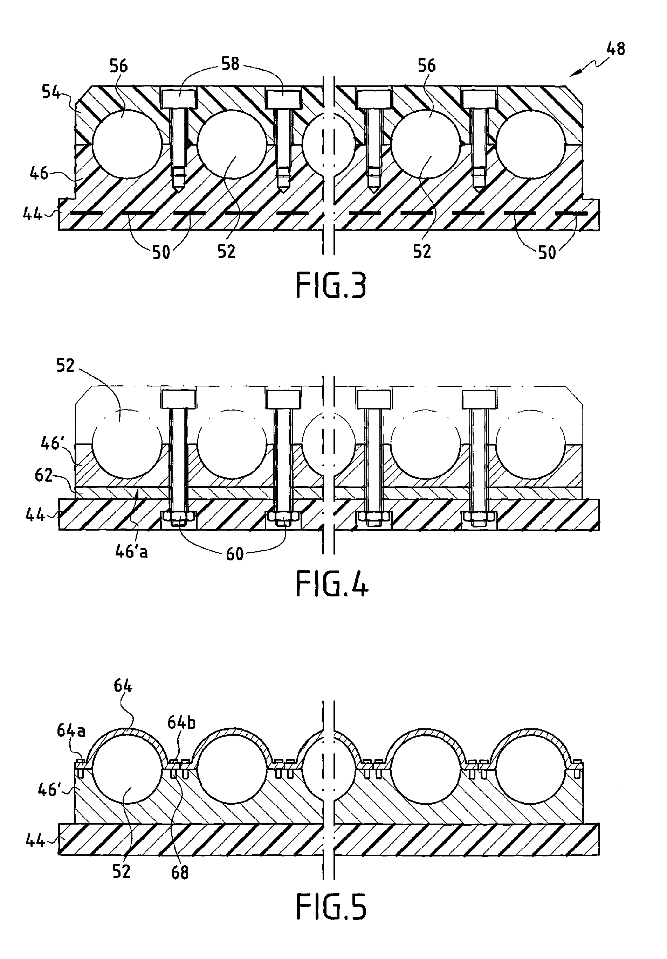

En se référant maintenant à la figure 3, on va décrire plus en détail un mode de réalisation des pièces transversales et des éléments de solidarisation. Dans ce mode de réalisation, la bande flexible 44 est réalisée en un matériau du type caoutchouc qui est pourvu de préférence dans le sens de sa longueur d'armatures de renforcement symbolisées par la référence 50 de manière à conférer à la bande 44 une résistance à la traction suffisante. Dans ce mode particulier de réalisation, les pièces transversales telles que 46 font partie intégrante de la bande 44 et sont réalisées par moulage en même temps que celles-ci. Comme on le voit sur la figure 3, la pièce transversale 46 est pourvue d'évidements de forme sensiblement semi-cylindrique tels que 52 régulièrement espacés sur la longueur de la pièce transversale 46 pour recevoir les différents flexibles hydrauliques 42. De préférence, le diamètre des évidements hémicylindriques 52 est égal au diamètre externe des flexibles hydrauliques 42 lorsque ceux-ci ne sont pas en charge, c'est-à-dire lorsqu'aucun liquide ne circule en leur intérieur. Dans ce mode de réalisation, les moyens de fixation 48 associés à chaque pièce transversale 46 sont constitués par une pièce unique 54 qui est elle-même pourvue d'évidements semi-cylindriques 56. Lorsque la pièce de fixation 54 est mise en place sur la pièce transversale 46, les évidements semi-cylindriques 52 et 56 définissent un passage cylindrique dont le diamètre est égal à celui du flexible hydraulique ainsi qu'on l'a déjà indiqué. La fixation de la pièce de solidarisation 54 sur la pièce transversale 46 peut être obtenue par tout moyen mécanique convenable par exemple par des vis 58.

Dans le mode de réalisation représenté sur la figure 4, les pièces transversales qui portent alors la référence numérique 46' sont constituées par des ensembles distincts de la bande 44. Les pièces transversales 46' comportent toujours les évidements semi-cylindriques 52 destinés à recevoir les flexibles hydrauliques 42. La fixation des pièces transversales 46' sur la bande 44 peut être réalisée par tout moyen convenable tel que des systèmes vis-écrou 60. Afin d'éviter une éventuelle usure due à l'action de la face inférieure des pièces transversales 46' référencées 46'a de la bande 44 de préférence on fixe sur cette face inférieure 46'a une lèvre en un matériau caoutchouteux 62 qui est ainsi déformée et interposée entre la pièce transversale 46' et la bande 44. Dans ce mode de réalisation, les pièces transversales 46' peuvent être réalisées à l'aide de tout matériau convenable tel qu'un métal capable de résister à l'environnement qui existe dans le forage.

Pour réaliser la fixation des pièces transversales, on peut équiper la face inférieure de celles-ci d'extensions rigides de forme convenable pour constituer des inserts lors de la réalisation de la bande flexible en caoutchouc.

Sur la figure 5, on a représenté une autre variante de réalisation des moyens de fixation des flexibles hydrauliques sur les pièces transversales 46'. Selon ce mode de réalisation, la fixation est obtenue à l'aide de brides individuelles telles que 64 dont les extrémités 64a, 64b sont fixées sur la face supérieure de la pièce transversale 46 entre les évidements 52 par tout moyen convenable tel que des boulons 68.

La largeur L de la bande 44 dépend bien sûr du nombre de flexibles hydrauliques 42 qui doivent être guidés et du diamètre de ceux-ci. Dans le cas de sept flexibles de diamètre un pouce et demi, la largeur de la bande est de l'ordre de 800 mm. On voit que cette largeur n'est définie que par le nombre de flexibles et leur diamètre. La longueur totale de la bande qui, comme on l'a déjà expliqué, peut être constituée par le raccordement bout à bout de plusieurs portions de bande peut, selon les cas, varier de 70 à 120 m selon la profondeur du forage à réaliser. L'épaisseur de la bande flexible peut être de l'ordre de 10 mm.

Dans le cas où le dispositif de guidage est constitué par plusieurs portions de bande flexible, il est intéressant de prévoir que les pièces transversales 46 et les pièces de fixation 48 disposées aux deux extrémités d'une portion de bande forment en même temps des moyens de raccordement hydraulique entre les extrémités des portions de flexibles hydrauliques.

De préférence, la bande flexible 44 est du type utilisé pour la réalisation de bandes transporteuses de convoyeurs. Elles sont réalisées en caoutchouc dont l'armature est calculée en fonction de la résistance à la traction souhaitée. Dans le cas particulier où le dispositif de guidage risque d'être en contact avec de l'huile (dont la bentonite ou lors des connexions de flexible), on choisira une bande flexible en nitrile.

## Revendications

1. Dispositif de guidage pour flexibles hydrauliques comprenant des pièces transversales espacées périodiquement sur la largeur du dispositif de guidage, destinées à recevoir au moins des flexibles hydrauliques orientés perpendiculairement auxdites pièces transversales, **caractérisé en ce qu'**il comporte en outre au moins une portion de bande flexible s'étendant selon la longueur des flexibles hydrauliques sur une face de laquelle sont fixées lesdites pièces transversales et des moyens de fixation desdits flexibles hydrauliques sur lesdites pièces transversales.

2. Dispositif de guidage selon la revendication 1, **caractérisé en ce que** ladite bande est réalisée en un matériau du type caoutchouc à armature interne.

3. Dispositif de guidage selon la revendication 2, **caractérisé en ce que** lesdites pièces transversales font partie intégrante de ladite bande.

4. Dispositif de guidage selon l'une quelconque des revendications 1 et 2, **caractérisé en ce que** lesdites pièces transversales sont des pièces rapportées fixées mécaniquement sur la face de ladite bande.

5. Dispositif de guidage selon l'une quelconque des revendications 1 à 4, **caractérisé en ce que** chaque pièce transversale comporte une pluralité d'évidements, chaque évidement étant destiné à recevoir un flexible hydraulique.

6. Dispositif de guidage selon l'une quelconque des revendications 1 à 4, **caractérisé en ce que**, pour chaque pièce transversale, lesdits moyens de fixation comprennent une unique pièce de fixation solidaire de ladite pièce transversale, et assurant un serrage desdits flexibles hydrauliques sur ladite pièce transversale.

7. Dispositif de guidage selon l'une quelconque des revendications 1 à 5, **caractérisé en ce que** pour chaque pièce transversale, lesdits moyens de fixation comprennent autant de brides de fixation qu'il y a de flexibles hydrauliques, chaque bride assurant un serrage du flexible hydraulique sur la pièce transversale.
